# FASCICULE DE BREVET EUROPEEN

(11) **EP 0 619 625 B1**
(45) Date de publication et mention de la délivrance du brevet: **05.03.1997**
(21) Numéro de dépôt: 94400651.9
(22) Date de dépôt: 28.03.1994
(51) Int. Cl.: H01R 13/514, H01R 13/658, H02G 3/08

(54) **Connecteur électrique pourvu d'une pluralité de modules de connexion disposés en lignes et colonnes**
Elektrischer Verbinder mit einer Anzahl von Modulen in Reihen und Kolonnen geordnet
Elctrical connector with a plurality of connection modules ordered in lines and columnes

(30) Priorité: 05.04.1993 FR 9303975
(43) Date de publication de la demande: 12.10.1994
(73) Titulaire: EUROCOPTER FRANCE, Société Anonyme dite:, F-13725 Marignane Cédex (FR)
(72) Inventeur: Lignelet, Jacky, F-13111 Coudoux (FR)
(74) Mandataire: Bonnetat, Christian

(56) Documents cités:
- EP-A- 0 293 042
- DE-A- 3 127 867
- DE-A- 3 149 060
- FR-A- 1 273 388
- US-A- 4 966 374
- US-A- 5 074 808

## Description

La présente invention concerne un connecteur électrique pourvu d'une pluralité de modules de connexion disposés en lignes et colonnes.

Par exemple, par les brevets français FR-A-2 115 556, FR-A-2 479 581, FR-A-2 489 609 et FR-A-2 501 428, on connaît déjà des connecteurs électriques comportant une pluralité de modules de connexion emboîtables sur un support commun et traversés par des organes de connexion susceptibles d'établir des liaisons électriques entre les faces avant et arrière desdits modules, respectivement opposée à et dirigée vers ledit support. Ces documents antérieurs décrivent différents moyens pour fixer chacun desdits modules de connexion dans le logement correspondant dudit support commun, ainsi que différents modes de réalisation pour lesdits organes de connexion (fiches mâles et fiches femelles), qui de préférence sont montés de façon amovible (clipsage) à l'intérieur de logements traversants, prévus à cet effet dans lesdits modules.

Par ailleurs, dans le commerce, on trouve, par exemple sous les références DMC-M et DMC-MD de la Société française Compagnie DEUTSCH et sous les références SIM-N et SIM-D de la Société française AIR LB, des connecteurs électriques comportant un porte-modules et une chambre de câblage adjacents et réalisés en un alliage d'aluminium, ledit porte-modules présentant une pluralité de logements, généralement quatre, dans lesquels peuvent être introduits et maintenus, par exemple par clipsage, des modules de connexion, tels que ceux décrits ci-dessus. Ces modules forment, pour ledit connecteur, du côté opposé à ladite chambre de câblage, une face d'enfichage permettant de relier ledit connecteur à un connecteur électrique complémentaire, semblable ou différent, mais pourvu d'une face d'enfichage complémentaire, et, du côté dirigé vers ladite chambre de câblage, une face de branchement pour les extrémités (généralement pourvues d'embouts de branchement) de conducteurs électriques pénétrant dans ladite chambre de câblage à travers la paroi de celle-ci, lesdits modules étant pourvus à cet effet d'organes de connexion (tels que ceux décrits ci-dessus) les traversant pour assurer les liaisons électriques entre ladite face d'enfichage et ladite face de branchement.

Dans ces connecteurs connus, les quatre modules sont alignés, de sorte que le porte-modules et la chambre de câblage présentent une section allongée et aplatie. Il en résulte des difficultés de branchement lorsque des conducteurs électriques appartenant à un même faisceau de câbles doivent être branchés sur des modules extrêmes. De plus, lorsqu'un tel connecteur est monté sur une cloison ou analogue, il est nécessaire de prévoir pour sa fixation une ouverture allongée et étroite de forme correspondante, de sorte que, dans le sens de la longueur de cette ouverture, ladite cloison est fortement affaiblie. Si, en outre, le connecteur complémentaire n'est pas rigoureusement aligné, il en résulte des efforts de flexion et/ou de torsion, risquant de détériorer lesdits connecteurs et ladite cloison, à cause de la rigidité desdits faisceaux de conducteurs électriques. Par ailleurs, comme cela est usuel, afin d'assurer le verrouillage de l'enfichage dudit connecteur et de son connecteur complémentaire, ledit connecteur comporte une vis centrale traversante, dont la tête de commande apparaît à l'extérieur de ladite chambre de câblage et qui est susceptible de se visser dans une douille filetée complémentaire. Du fait de la section allongée et aplatie dudit connecteur, on voit que la tête de manoeuvre de ladite vis de verrouillage se trouve entre les faisceaux de conducteurs et est donc difficilement accessible. Cette tête de manoeuvre n'est pratiquement plus accessible, si le connecteur est disposé entre d'autres connecteurs semblables. On remarquera de plus que, du fait de la forme aplatie du connecteur et de la rigidité desdits faisceaux de conducteurs, ceux-ci, au voisinage de ladite chambre de câblage, sont coplanaires audit connecteur et ne peuvent commencer à être orientés dans une direction différente désirée qu'à partir d'une assez grande distance dudit connecteur. Il en résulte donc un encombrement important derrière ledit connecteur, et donc une perte de place disponible, ce qui est particulièrement préjudiciable dans le cas où lesdits connecteurs doivent être embarqués à bord d'un aéronef, tel qu'un hélicoptère ou un avion.

D'une façon générale, dans ces connecteurs connus, le porte-modules et la chambre de câblage sont deux unités différentes, fixés l'un à l'autre par ladite vis de verrouillage traversante et/ou des vis de pression latérales. De plus, la chambre de câblage est constituée par un boîtier plat, obturé par une plaque de couvercle qui y est fixée par vis. Il en résulte un nombre important de vis (une dizaine), de sorte que l'assemblage d'un tel connecteur est long (de 7 à 15 minutes). De plus, ces vis sont de petites dimensions et donc fragiles et elles risquent de détériorer les conducteurs internes à ladite chambre de câblage.

Notamment lorsqu'ils sont destinés à faire partie des circuits électriques d'un aéronef, ces connecteurs connus sont durcis, c'est-à-dire protégés contre les interférences électromagnétiques, de nature nucléaire ou autre, ainsi que contre la foudre et contre la contamination à partir d'un autre équipement embarqué. Ainsi, on évite les perturbations et les dégradations qui pourraient être occasionnées à l'aéronef par les causes précitées, de telles perturbations et dégradations pouvant même entraîner la destruction dudit aéronef.

Pour durcir un tel connecteur, on rend étanches, à l'aide de joints, ledit porte-modules et ladite chambre de câblage, notamment entre les modules et leurs logements dans le porte-modules et entre lesdits organes de connexion et leurs logements dans lesdits modules, et on assure la continuité de masse entre les différentes pièces. La structure desdits connecteurs connus ne permet pas une étanchéité et une continuité de masse systématiques à chaque jonction.

De plus, toujours dans le but de durcir les connecteurs connus, on prévoit des cheminées de passage des faisceaux de conducteurs entre ladite chambre de câblage et l'extérieur et on revêt lesdits faisceaux de conducteurs d'une tresse conductrice. On peut ainsi assurer l'étanchéité entre l'extérieur et la chambre de câblage en prévoyant des joints dans lesdites cheminées et assurer la continuité de masse entre les conducteurs et le connecteur en reliant, par exemple à l'aide d'un collier métallique, lesdites tresses des faisceaux de conducteurs aux cheminées correspondantes. De telles cheminées sont de simples manchons cylindriques, à section circulaire ou ovale, en matière conductrice qui font saillie à l'extérieur de ladite chambre de câblage et qui sont, soit rapportées par vissage, soit d'une seule pièce avec ladite chambre de câblage.

Quel que soit leur mode de solidarisation à ladite chambre de câblage, on voit que ces cheminées accroissent encore la rigidité propre des faisceaux de câbles, de sorte qu'elles accentuent les inconvénients mentionnés ci-dessus, à propos de l'accessibilité de la vis centrale de verrouillage et de l'encombrement excessif à l'arrière de ladite chambre de câblage.

Lorsqu'elles sont fixées à la chambre de câblage à l'aide de vis, on voit que les cheminées augmentent le temps de montage des connecteurs, déjà long comme mentionné ci-dessus. De plus, pour assujettir correctement la tresse métallique d'un faisceau de conducteurs sur la cheminée correspondante, il est préférable de démonter ladite cheminée. Il est donc ensuite nécessaire de revisser ladite cheminée sur la chambre de câblage, ce qui est une opération délicate et longue, par suite de la rigidité et de l'encombrement des faisceaux de conducteurs pourvus de tresse conductrice et des colliers permettant de serrer ladite tresse sur la cheminée. Il arrive d'ailleurs souvent qu'au cours du remontage d'une cheminée sur la chambre de câblage, on détériore la partie de la tresse conductrice recouvrant ladite cheminée.

Du fait que, par suite de la forme allongée et aplatie du connecteur, il n'est pas possible de brancher des conducteurs d'un même faisceau sur tous les modules, il est nécessaire de prévoir plusieurs faisceaux et donc plusieurs cheminées. Ceci entraîne que, pour un seul connecteur, il est indispensable d'effectuer plusieurs assujettissements longs et délicats de tresses conductrices sur des cheminées, et donc de prévoir un temps de montage important.

Enfin, ces cheminées étant constituées par un manchon monobloc, il est pratiquement impossible d'automatiser le montage des embouts d'extrémité des conducteurs dans lesdits modules.

La présente invention a pour objet de remédier à ces inconvénients des connecteurs connus et de décrire un connecteur permettant de satisfaire aux normes les plus sévères des réglementations internationales, notamment dans le domaine aéronautique, en ce qui concerne la protection contre les perturbations électromagnétiques externes, ainsi que de permettre un montage automatisé dudit connecteur sur des conducteurs électriques.

A cette fin, selon l'invention, le connecteur électrique comportant un porte-modules et une chambre de câblage séparés mais adjacents, ledit porte-modules présentant une pluralité de modules de connexion, qui forment, du côté opposé à ladite chambre de câblage, une face d'enfichage permettant de relier ledit connecteur à un connecteur électrique complémentaire extérieur, semblable ou différent, mais pourvu d'une face d'enfichage complémentaire et, du côté dirigé vers ladite chambre de câblage, une face de branchement pour les extrémités de conducteurs électriques pénétrant dans ladite chambre de câblage, lesdits modules étant pourvus à cet effet d'organes de connexion les traversant pour assurer les liaisons électriques entre ladite face d'enfichage et ladite face de branchement, est remarquable :
- en ce que ladite pluralité de modules de connexion est disposée en lignes et en colonnes pour donner audit porte-modules, parallèlement à ladite face d'enfichage, une section approximativement carrée ; et
- en ce que ladite chambre de câblage est constituée de deux coques assemblables entre elles, ainsi que sur ledit porte-modules.

Ainsi, grâce à la présente invention, on remédie aux inconvénients mentionnés ci-dessus attachés à la forme allongée et aplatie des connecteurs connus.

En ce qui concerne l'inconvénient plus spécifique dû à la rigidité des conducteurs électriques, on peut l'éliminer en grande partie en prévoyant qu'au moins la face de ladite chambre de câblage, de préférence la face arrière portant au moins une cheminée, est oblique et orientée en direction desdits conducteurs électriques.

Ainsi, lesdits conducteurs sont pré-orientés à la sortie (ou à l'entrée) dudit connecteur conforme à l'invention, ce qui réduit leur rayon de courbure au voisinage dudit connecteur.

Dans le cas où l'on prévoit, pour le passage desdits conducteurs électriques, des cheminées solidaires de ladite paroi de ladite chambre de câblage à travers laquelle passent lesdits conducteurs, il est avantageux que lesdites cheminées soient constituées de deux demi-cheminées assemblables longitudinalement et que lesdites cheminées soient maintenues solidaires de ladite chambre de câblage par emprisonnement entre lesdites deux coques assemblées.

De plus, du fait de la forme sensiblement carrée de la section du connecteur électrique, on voit qu'on peut diminuer le nombre des cheminées, et même envisager de ne prévoir qu'une seule cheminée centrale.

En outre, grâce à la structure conforme à l'invention, il est possible de disposer lesdites coques et lesdites cheminées autour des conducteurs électriques, après le branchement de ceux-ci sur ledit porte-modules, et d'effectuer facilement les opérations de liaison des tresses conductrices sur les cheminées (sans avoir à enfiler celles-ci sur les conducteurs avant le branchement sur le porte-modules) et de solidarisation desdites cheminées, ainsi reliées auxdites tresses conductrices, sur lesdites coques.

De préférence, chaque demi-cheminée est pourvue d'une plaquette de base transversale, lesdites plaquettes formant, après assemblage desdites demi-cheminées, des plaques de base transversales pour lesdites cheminées et des fentes sont prévues dans l'épaisseur de parois latérales desdites coques, par exemple dans l'épaisseur des parois arrière, pour servir de logement auxdites plaques de base transversales.

Lesdites demi-cheminées peuvent présenter des sections de toutes formes appropriées, par exemple semi-circulaire ou en U. Dans ce dernier cas, les profondeurs des U de deux demi-cheminées coopérantes peuvent être identiques ou différentes, de sorte que l'on peut obtenir toute ovalisation désirée pour les cheminées.

Dans un mode de réalisation avantageux, le connecteur électrique conforme à la présente invention comporte au moins un ensemble de deux cheminées associées, dans lequel chacune desdites cheminées est conformée, à son extrémité libre opposée audit connecteur, avec un méplat, lesdites cheminées associées étant accolables l'une contre l'autre par leurs méplats respectifs, pour former un manchon d'extrémité commun, bien que divisé intérieurement par lesdits méplats, pour le passage desdits conducteurs électriques.

Ainsi, on peut disposer une seule gaine en blindage autour de la totalité des conducteurs électriques traversant lesdites cheminées associées. De plus, on évite l'utilisation de dérivations et on réalise un gain de matériel (élimination de colliers de serrage, économie de tresse de cuivre, etc ...). Il en résulte donc des gains de poids et une réduction du temps de montage dudit connecteur.

Dans le cas d'un connecteur comportant quatre modules de connexion, un tel ensemble de deux cheminées associées permet la totalité des liaisons et optimise les possibilités d'utilisation desdits modules.

Les extrémités libres desdites cheminées sont de préférence hémicylindriques, de sorte que ledit manchon d'extrémité commun est cylindrique.

Avantageusement, afin d'accroître l'étanchéité desdites cheminées, lesdites demi-cheminées s'assemblent le long d'un plan de joint longitudinal formé d'épaulements longitudinaux coopérants. Ainsi, ledit plan de joint forme des chicanes transversales s'opposant aux échanges entre l'extérieur et l'intérieur des cheminées.

Il est avantageux également que le bord libre desdites parois latérales desdites coques comporte, à l'aplomb desdites fentes, des échancrures de forme correspondant à la forme extérieure desdites cheminées, afin que ces échancrures épousent au plus près lesdites cheminées.

Avantageusement, le porte-modules comporte, du côté de ladite chambre de câblage, un cadre entourant ladite face de branchement et servant à la solidarisation desdites coques sur ledit porte-modules. Ce cadre peut comporter un rebord périphérique saillant, susceptible de coopérer avec des fentes d'assemblage prévues dans lesdites coques. On obtient ainsi un emboîtement mécanique des coques sur le porte-modules.

Egalement à des fins de bonne étanchéité de la chambre de câblage, il est avantageux que lesdites coques s'assemblent le long d'un plan de joint formé d'épaulements longitudinaux coopérants, de façon à former des chicanes transversales.

On peut prévoir des vis pour au moins fixer lesdites coques assemblées l'une sur l'autre.

Les figures du dessin annexé feront bien comprendre comment l'invention peut être réalisée. Sur ces figures, des références identiques désignent des éléments semblables.

La figure 1 montre, en perspective, deux connecteurs électriques complémentaires connus, non branchés l'un à l'autre.

La figure 2 illustre, en vue de dessus, le dispositif de connexion connu constitué par les deux connecteurs électriques connus de la figure 1, branchés l'un à l'autre et montés sur une paroi.

La figure 3 est une vue de bout de la face arrière desdits connecteurs connus de la figure 1.

Les figures 4 et 6 illustrent, en perspective, deux modes de réalisation connus pour les cheminées de passage des conducteurs électriques.

Les figures 5 et 7 illustrent, respectivement, également en perspective, la connexion de masse entre lesdites cheminées des figures 4 et 6 et les tresses métalliques entourant les conducteurs électriques reliés auxdits connecteurs connus.

Les figures 8 à 11 sont des vues en perspective schématique d'exemples de connecteurs conformes à la présente invention.

Les figures 12, 13, 14 et 15 illustrent des modes de réalisation de cheminées, conformément à la présente invention.

Les figures 16 et 17 sont des vues éclatées, en perspective, des éléments principaux de deux modes de réalisation du connecteur conforme à la présente invention.

Les figures 18 et 19 correspondent respectivement aux modes de réalisation des figures 16 et 17, équipés des cheminées de la figure 15.

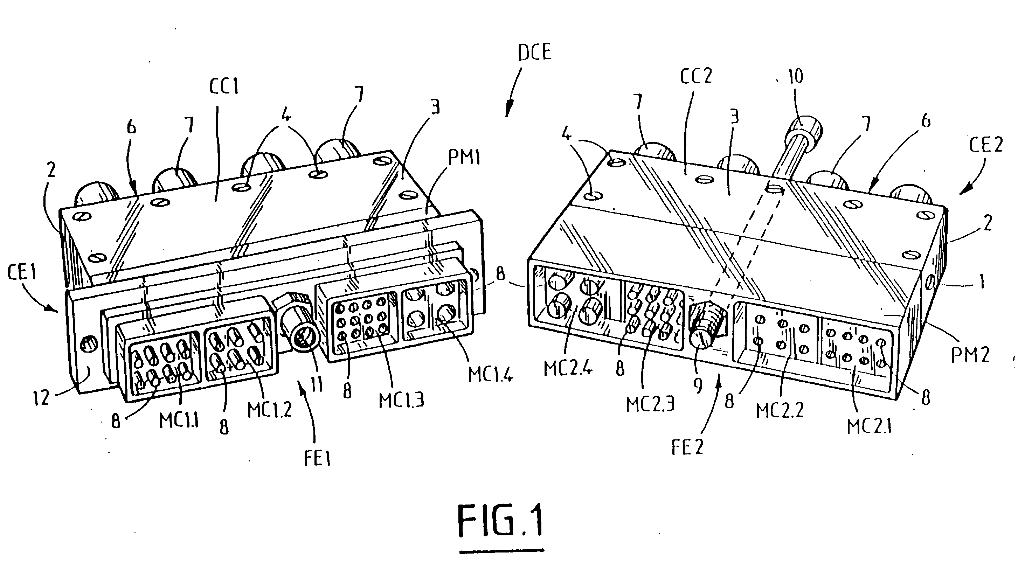

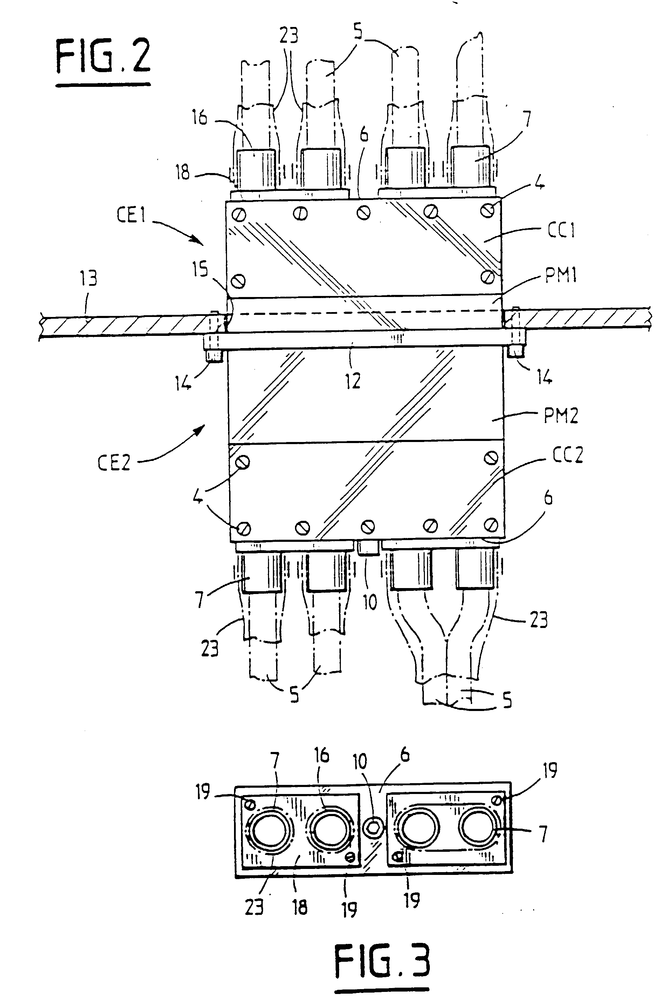

Le dispositif de connexion électrique DCE connu, montré par les figures 1 et 2, comporte deux connecteurs électriques complémentaires CE1 et CE2. Chaque connecteur électrique CE1 ou CE2 comporte un porte-modules PM1 ou PM2, respectivement, et une chambre de câblage CC1 ou CC2, respectivement, réalisés en une matière conductrice de l'électricité (alliage d'aluminium par exemple).

Les chambres de câblage CC1 et CC2 forment chacune une unité, qui est rapportée au connecteur électrique correspondant CE1 ou CE2 par emboîtement et qui y est fixée par des vis latérales 1. Chaque chambre de câblage CC1 ou CC2 est formée par un boîtier 2 et une plaque de couvercle 3, fixée audit boîtier par une pluralité de vis 4.

Chaque porte-modules PM1 ou PM2 présente une pluralité de logements dans lesquels sont introduits et maintenus des modules de connexion MC1.1 à MC1.4 et MC2.1 à MC2.4, respectivement. La fixation desdits modules dans les logements correspondants est obtenue de toute manière connue, mais non représentée, par exemple par clipsage. Les modules de connexion MC1.1 à MC1.4 du connecteur électrique CE1 forment, du côté opposé à la chambre de câblage CC1, une face d'enfichage FE1 complémentaire de la face d'enfichage FE2 formée, du côté opposé à la chambre de câblage CC2, par les modules de connexion MC2.1 à MC2.4 du connecteur électrique CE2.

Du côté des chambres de câblage CC1 et CC2, lesdits modules de connexion MC1.1 à MC1.4 et MC2.1 à MC2.4 forment des faces de branchement (non visibles sur les figures 1 et 2) pour les extrémités de conducteurs électriques 5.

Dans les connecteurs électriques CE1 et CE2, les modules de connexion MC1.1 à MC1.4 et MC2.1 à MC2.4 sont disposés en ligne, de sorte que chacun desdits connecteurs électriques présente une forme aplatie, allongée dans le sens de l'alignement desdits modules de connexion.

Les conducteurs électriques 5 pénètrent dans les chambres de câblage CC1 et CC2, par la face arrière allongée correspondante 6 de celles-ci, opposée à la face d'enfichage FE1 ou FE2, à travers des cheminées conductrices 7, fixées sur lesdites faces allongées 6.

Chaque module de connexion MC1.1 à MC1.4 et MC2.1 à MC2.4 est pourvu d'organes de connexion 8, par exemple des broches de type mâle et femelle les traversant, destinés à assurer la continuité électrique entre les faces de branchement (non visibles car disposées du côté des chambres de câblage et auxquelles les extrémités des conducteurs 5 sont reliées) et les faces d'enfichage correspondantes FE1 et FE2, ainsi qu'entre lesdites faces d'enfichage FE1 et FE2, lorsque lesdits connecteurs électriques CE1 et CE2 sont accouplés (voir la figure 2).

Pour verrouiller lesdits connecteurs électriques CE1 et CE2 en position accouplée, on prévoit une vis traversante 9, prisonnière du connecteur électrique CE2 et pourvue d'une tête de manoeuvre 10, susceptible de coopérer avec une douille filetée 11, solidaire du connecteur électrique CE1. Le porte-modules PM1 de ce dernier peut comporter une collerette 12, permettant de le fixer sur une paroi 13 à l'aide de vis 14, à la périphérie d'une ouverture 15 dans laquelle est engagé ledit connecteur électrique CE1.

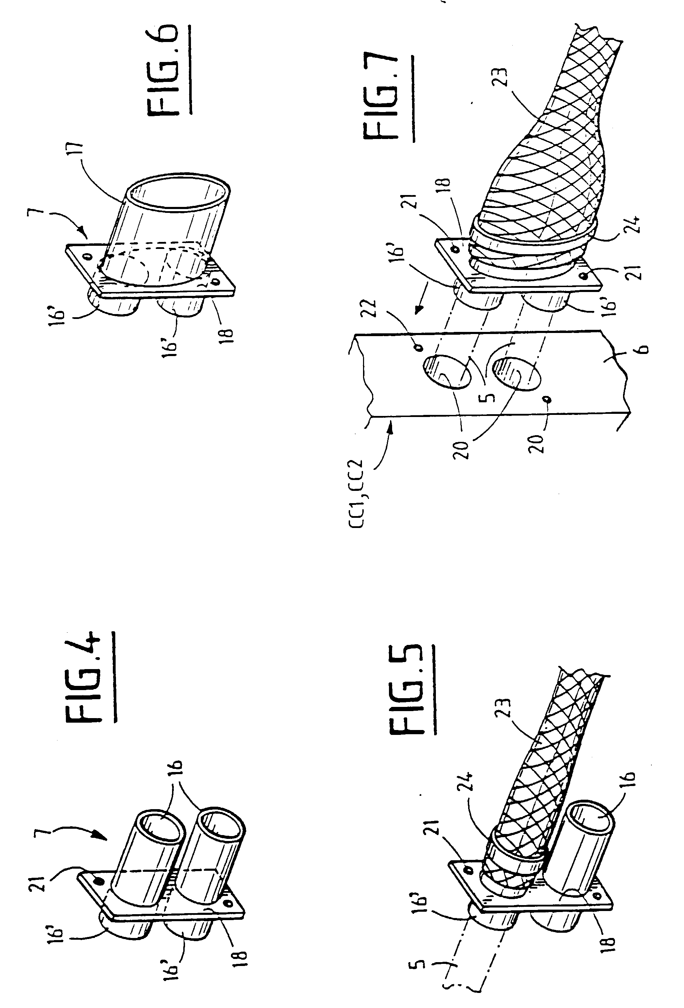

Comme le montrent les figures 2 et 3, et plus distinctement les figures 4 à 7, les cheminées 7 des connecteurs électriques connus CE1 et CE2 sont constituées par des manchons 16 ou 17, à section cylindrique ou ovale, solidaires de plaques de base transversales 18, pouvant être fixées sur les faces arrière 6 des connecteurs électriques CE1 et CE2, grâce à des vis 19. Dans le mode de réalisation de la figure 4, deux manchons cylindriques 16, pouvant chacun être traversés par un faisceau de conducteurs 5 (par exemple un câble), sont solidaires d'une plaque de base commune 18. Bien entendu, chaque manchon cylindrique 16 peut être pourvu de sa propre plaque de base. Chaque manchon cylindrique 16 traverse la plaque 18 et présente un prolongement 16' susceptible de pénétrer à l'intérieur de passages 20, prévus dans lesdites faces arrière 6, pour le passage des conducteurs 5 (voir la figure 7). Des trous 21 et 22 (filetés) sont respectivement prévus dans les bases 18 et dans les faces arrière 6 pour lesdites vis de fixation 19.

Dans le mode de réalisation, également connu, de la figure 6, les deux manchons cylindriques 16 de la figure 4 sont remplacés par un manchon unique 17, à section ovale, pour le passage de deux faisceaux de conducteurs 5, ledit manchon 17 étant prolongé, du côté opposé de la plaque 18, par deux prolongements 16', comme ceux décrits précédemment.

Comme cela a été décrit ci-dessus et est représenté sur les figures 2, 5 et 7, afin d'assurer la continuité de masse, les conducteurs électriques 5 sont entourés de tresses conductrices 23, maintenues en contact électrique avec lesdites cheminées 7 par des colliers de serrage 24, lesdites tresses conductrices 23 et lesdits colliers de serrage 24 devant, pour des raisons de commodité, être solidarisés desdites cheminées 7 avant montage définitif de celles-ci sur lesdites chambres de câblage CC1 et CC2.

De la description qui précède, en regard des figures 1 à 7 (qui a omis volontairement, car bien connus dans la technique, les différents joints d'étanchéité), on constate qu'il est pratiquement impossible d'automatiser le montage des connecteurs électriques CE1 et CE2 sur les extrémités de conducteurs, du fait même de la conception des chambres de câblage CC1 et CC2 (nombre élevé des vis 4 pour fixer les plaques de couvercle 3 sur les boîtiers 2), de la conception des cheminées 7 (qui doivent être enfilées sur les conducteurs 5) et du mode de fixation desdites cheminées 7 sur les connecteurs CE1 et CE2 par vissage.

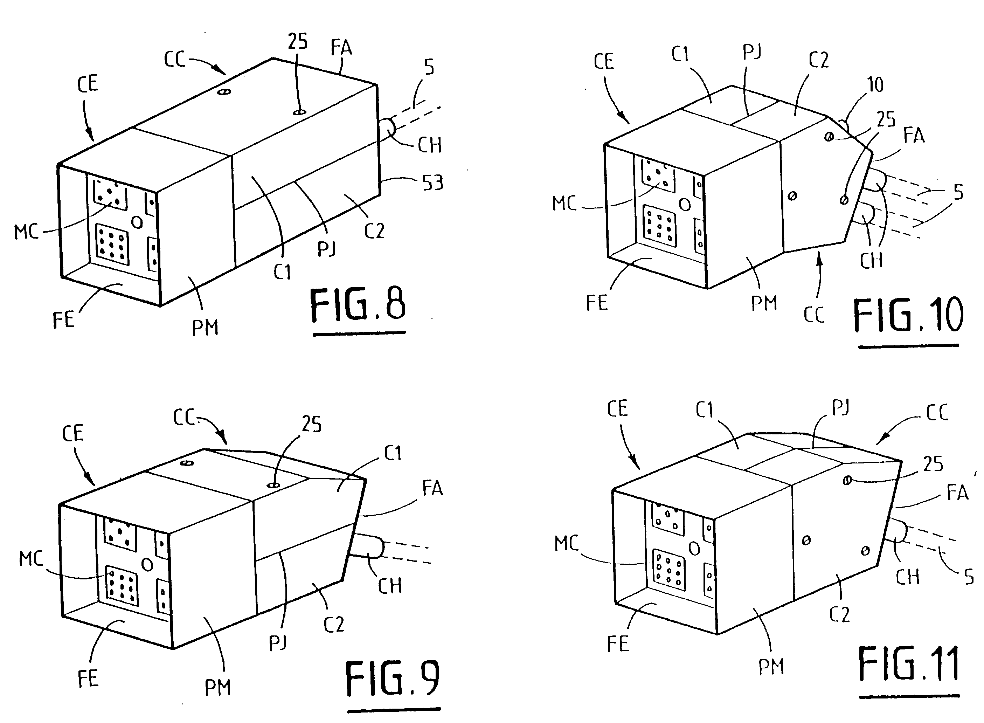

Pour remédier à cet inconvénient, le connecteur électrique CE selon l'invention (destiné à remplacer l'un ou l'autre desdits connecteurs CE1 et CE2 connus décrits ci-dessus) comporte essentiellement (voir les figures 8 à 11) :
- deux coques C1 et C2 verrouillées par des vis 25 et destinées à former une chambre de câblage CC (comparable aux chambres de câblage CC1 et CC2) et assemblables entre elles le long d'un plan de joint PJ, ainsi que sur le porte-modules PM (comparable aux porte-modules PM1 et PM2), du côté opposé à la face d'enfichage FE de celui-ci ;
- des cheminées CH destinées à remplacer les cheminées 7 et maintenues solidaires de la chambre de câblage CC par emprisonnement entre les coques C1 et C2.

De plus, dans le connecteur CE conforme à l'invention, les quatre modules de connexion MC (dont chacun d'eux représente un module MC1.1 à MC1.4 ou MC2.1 à MC2.4) sont disposés en lignes et colonnes (de deux modules chacune) autour de la vis 9 ou de la douille 11, de sorte que le porte-modules PM a une section transversale approximativement carrée.

Sur les figures 8 et 9, le plan de joint PJ est horizontal, tandis que, sur les figures 10 et 11, il est vertical.

Dans l'exemple de réalisation de la figure 8, la face arrière FA de la chambre de câblage, portant la ou les cheminées CH, est droite, parallèle à la face d'enfichage FE du connecteur, tandis que, dans les exemples de réalisation des figures 9, 10 et 11, ladite face arrière est oblique, pour orienter les cheminées CH en direction des conducteurs électriques 5.

Selon une particularité importante de la présente invention, les cheminées conductrices CH sont constituées de deux demi-cheminées 30 assemblables longitudinalement.

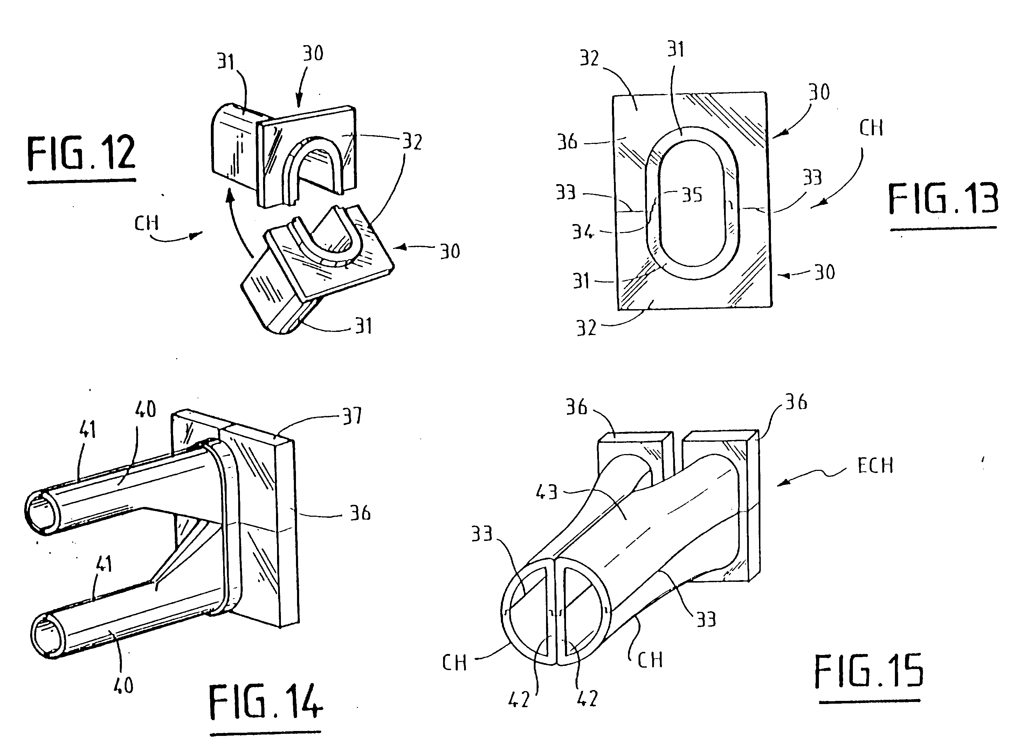

Dans l'exemple de réalisation illustré par les figures 12 et 13, chaque demi-cheminée 30 est constituée d'une partie en gouttière 31, associée à une partie de base 32. Les deux parties en gouttière 31 des demi-cheminées 30 peuvent présenter une section semi-circulaire ou (comme représenté) une section en forme de U. Dans ce dernier cas, les U peuvent être identiques ou différents, en ce qui concerne leur profondeur. Les parties de base 32 sont en forme de plaquettes rectangulaires entourant la partie convexe desdites gouttières 31. Les deux demi-cheminées 30 sont assemblables longitudinalement le long d'un plan de joint 33, qui, de préférence comme représenté, n'est pas plat, mais comporte des épaulements coopérants 34 et 35 susceptibles de former des chicanes transversales. Ainsi, on obtient une meilleure étanchéité des cheminées.

Sur la figure 12, la cheminée CH est représentée en vue en perspective éclatée, tandis que, sur la figure 13, la cheminée CH est représentée en vue de bout, assemblée.

Dans cette position assemblée, les deux plaquettes 32 forment une plaque de base 36.

De nombreuses variantes de réalisation peuvent être prévues pour les cheminées conductrices CH. Par exemple, sur la figure 14, on a représenté en perspective un exemple de système à deux gouttières circulaires 40, chaque gouttière étant formée, comme précédemment, de deux demi-gouttières assemblées longitudinalement le long de plans de joint 41. Dans ce cas, la plaque de base 36 est formée de quatre parties de base 37 assemblées.

Quant à elle, la figure 15 illustre un ensemble de cheminées ECH en forme de culotte, comportant deux cheminées CH associées identiques, à section évolutive. Du côté opposé à leur plaque de base 36, chacune des cheminées CH présente une section pourvue d'un méplat 42 et les deux cheminées sont conformées pour pouvoir être accolables le long de leurs méplats 42, alors que leurs plaques de base 36 sont coplanaires. Comme précédemment, chaque cheminée CH est composée de deux demi-cheminées assemblables le long de plans de joint 33.

Ainsi, du côté opposé aux plaques de base coplanaires 36, l'ensemble ECH des cheminées associées présente un manchon d'extrémité 43, divisé intérieurement et longitudinalement par les méplats 42 accolés.

Dans l'exemple représenté, le manchon d'extrémité 43 est cylindrique, car les extrémités libres de chacune desdites cheminées CH sont hémicylindriques (chaque demi-cheminée ayant une section d'extrémité en quart de cercle).

On voit qu'ainsi les deux cheminées associées de l'ensemble ECH présentent un manchon 43 commun, divisé intérieurement, pour le passage des conducteurs électriques.

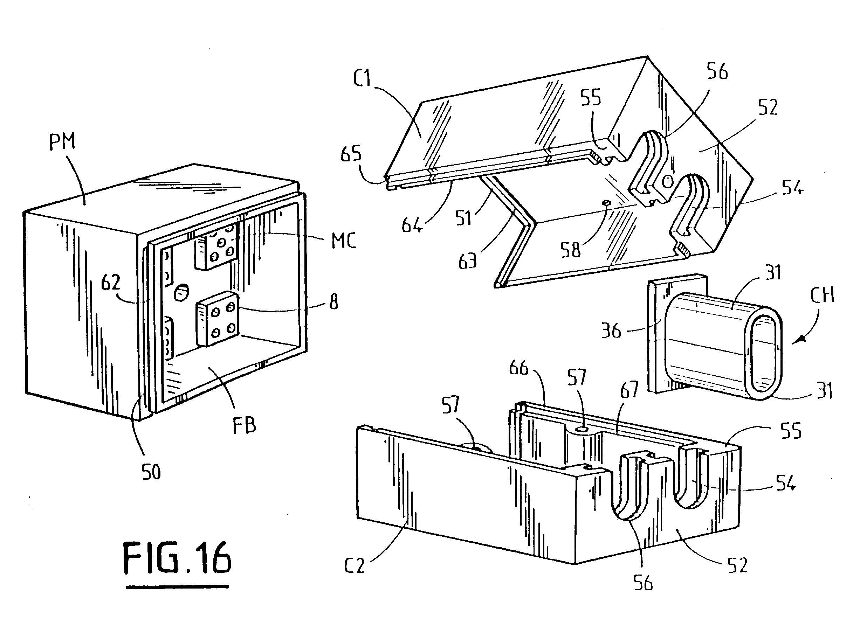

Dans l'exemple de réalisation du connecteur conforme à l'invention, illustré par la figure 16 (qui correspond à celui montré monté sur la figure 8), le porte-modules PM comporte, autour de sa face de branchement FB, un cadre 50 pourvu d'un rebord périphérique saillant 62. Du côté dirigé vers le porte-modules PM, chacune des coques C1 et C2 présente une portée 51, pourvue d'une rainure 63 et destinée à venir s'appliquer contre le cadre 50, en emprisonnant le rebord périphérique saillant 62 dans lesdites rainures 63.

Du côté opposé au porte-modules PM, chacune des coques C1 et C2 comporte une paroi latérale arrière épaisse 52, les deux parois arrière 52 étant destinées à former, pour le connecteur CE, une paroi arrière 53 comparable à la paroi arrière 6 décrite ci-dessus en regard des figures 2 et 3. Dans l'épaisseur des parois latérales arrière 52 sont pratiquées des fentes 54, destinées à servir de logement à des plaques de base 36 de cheminée CH (dont une seule est représentée). Les bords libres 55 des parois arrière 52 sont échancrés (en 56) à l'aplomb des fentes 54, afin d'être adaptés en forme aux gouttières 31.

Le frottement entre les plaques de base 36 et les parois des fentes 54 est apte à assurer le contact électrique entre les cheminées CH et les coques C1 et C2.

On conçoit aisément que, grâce à la constitution du connecteur selon l'invention, les coques C1 et C2 peuvent être assemblées entre elles, ainsi qu'au porte-modules PM, en emprisonnant entre elles les cheminées CH. On prévoit par exemple des trous filetés 57 dans la coque C2 pour les quelques vis 25 traversant des trous 58 de la coque C1 et destinées à fixer entre eux les divers éléments PM, C1, C2 et CH.

Le plan de joint PJ comporte des épaulements d'emboîtement coopérants 64 à 67, respectivement prévus sur lesdites coques C1 et C2.

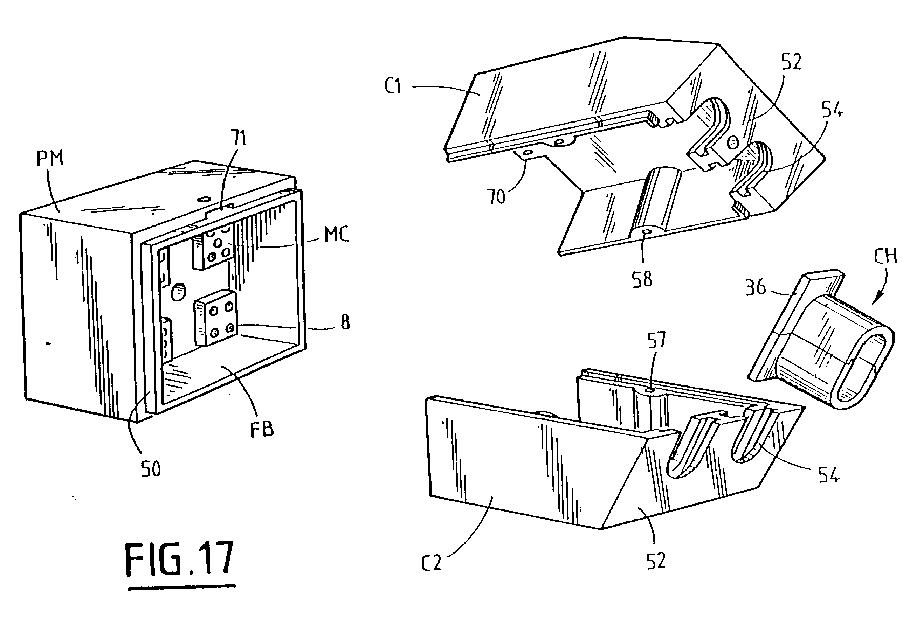

Dans la variante de réalisation de la figure 17 (qui correspond à celle de la figure 9), on retrouve pour l'essentiel les éléments du connecteur de la figure 16. Cependant, dans ce cas, le cadre 50 ne comporte pas de rebord périphérique saillant 62, de sorte que les portées 51 sont planes. On peut prévoir des moyens de fixation supplémentaires entre les éléments PM, C1 et C2, par exemple une languette 70 sur la coque C1, susceptible de pénétrer dans une fente 71 du porte-modules PL et d'y être fixée par vis.

Dans ce cas, les faces arrière 52 des coques C1 et C2 sont obliques.

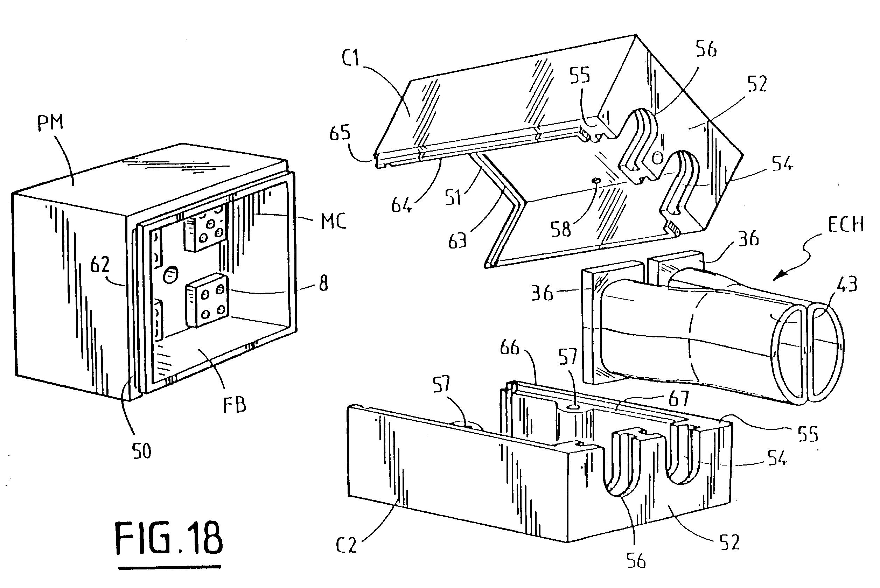

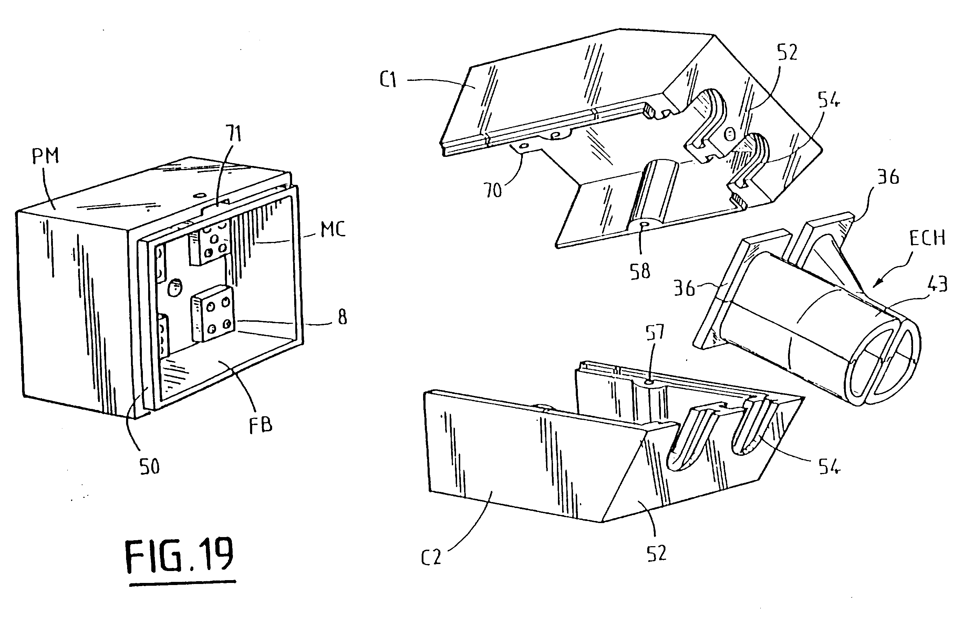

Les figures 18 et 19 correspondent respectivement aux figures 16 et 17. Cependant, les cheminées CH (conformes aux figures 12 et 13) y sont remplacées par l'ensemble ECH de la figure 15. Les coques C1 et C2 comportent deux paires de fentes 54 pour la réception des deux plaques de base 36 de l'ensemble ECH.

Sur les figures 16 à 19, on n'a pas représenté les différents joints connus, permettant d'assurer l'étanchéité du connecteur.

On conçoit aisément que, grâce à la structure du connecteur conforme à la présente invention, il est possible d'automatiser le montage de celui-ci sur les extrémités de conducteurs 5. En effet, le connecteur étant désassemblé, il est aisé de relier lesdites extrémités de conducteurs sur les organes de connexion 8 du porte-modules PM, du côté de la face de branchement FB, puis d'enfermer lesdits conducteurs dans la chambre de câblage CC et d'assurer la liaison de masse entre les tresses conductrices 23 et les cheminées CH, en rapportant les cheminées CH et les coques C1 et C2 autour desdits conducteurs.

## Revendications

1. Connecteur électrique (CE) comportant un porte-modules (PM) et une chambre de câblage (CC) séparés mais adjacents, ledit porte-modules présentant une pluralité de modules de connexion (MC), qui forment, du côté opposé à ladite chambre de câblage, une face d'enfichage (FE) permettant de relier ledit connecteur à un connecteur électrique complémentaire, semblable ou différent, mais pourvu d'une face d'enfichage complémentaire et, du côté dirigé vers ladite chambre de câblage, une face de branchement (FB) pour les extrémités de conducteurs électriques pénétrant dans ladite chambre de câblage à travers la paroi de celle-ci, lesdits modules étant pourvus d'organes de connexion (8) les traversant pour assurer les liaisons électriques entre ladite face d'enfichage et ladite face de branchement,
caractérisé :
- en ce que ladite pluralité de modules de connexion (MC) est disposée en lignes et en colonnes pour donner audit porte-modules (PM), parallèlement à ladite face d'enfichage, une section approximativement carrée ; et
- en ce que ladite chambre de câblage (CC) est constituée de deux coques (C1,C2) assemblables entre elles, ainsi que sur ledit porte-modules.

2. Connecteur électrique selon la revendication 1,
caractérisé en ce que la paroi de ladite chambre de câblage à travers laquelle pénètrent lesdits conducteurs électriques est oblique et orientée en direction desdits conducteurs.

3. Connecteur électrique selon l'une des revendications 1 ou 2, dans lequel sont prévues des cheminées entourant lesdits conducteurs électriques et solidaires de la paroi de ladite chambre de câblage à travers laquelle passent lesdits conducteurs pénétrant dans cette dernière,
caractérisé en ce que :
- lesdites cheminées sont constituées de deux demi-cheminées assemblables longitudinalement ; et
- lesdites cheminées sont maintenues solidaires de ladite chambre de câblage par emprisonnement entre lesdites coques assemblées.

4. Connecteur électrique selon la revendication 3,
caractérisé en ce que chaque demi-cheminée (30,40) est pourvue d'une plaquette de base transversale (32,37), en ce que lesdites plaquettes de base transversales forment, après assemblage desdites demi-cheminées, des plaques de base transversales (36) pour lesdites cheminées et en ce que des fentes (54) sont prévues dans l'épaisseur de parois latérales (52) desdites coques pour servir de logement auxdites plaques de base transversales (36).

5. Connecteur électrique selon la revendication 3 ou 4,
caractérisé en ce que chaque demi-cheminée (40) présente une section semi-circulaire.

6. Connecteur électrique selon la revendication 3 ou 4,
caractérisé en ce que chaque demi-cheminée (30) présente une section en U.

7. Connecteur électrique selon l'une des revendications 3 ou 4,
caractérisé en ce qu'il comporte au moins un ensemble (ECH) de deux cheminées associées, dans lequel chacune desdites cheminées est conformée, à son extrémité libre opposée audit connecteur, avec un méplat (42), lesdites cheminées associées étant accolables l'une contre l'autre par leurs méplats (42) respectifs, pour former un manchon d'extrémité commun (43), bien que divisé intérieurement par lesdits méplats, pour le passage desdits conducteurs électriques.

8. Connecteur électrique selon la revendication 7,
caractérisé en ce que lesdites extrémités libres desdites cheminées sont hémicylindriques, de sorte que ledit manchon d'extrémité commun (43) est cylindrique.

9. Connecteur électrique selon l'une des revendications 3 à 8,
caractérisé en ce que lesdites demi-cheminées s'assemblent le long d'un plan de joint longitudinal (33,41) formé d'épaulements longitudinaux coopérants (34,35).

10. Connecteur électrique selon l'une des revendications 4 à 9,
caractérisé en ce que le bord libre (55) desdites parois latérales (52) desdites coques comporte, à l'aplomb desdites fentes (54), des échancrures (56) de forme correspondant à la forme extérieure desdites cheminées (CH).

11. Connecteur électrique selon l'une des revendications 1 à 10,
caractérisé en ce que ledit porte-modules (PM) comporte, du côté de ladite chambre de câblage (CC), un cadre (50) entourant ladite face de branchement (FB) et servant à la solidarisation desdites coques sur ledit porte-modules.

12. Connecteur électrique selon la revendication 11,
caractérisé en ce que ledit cadre (50) comporte un rebord périphérique saillant (62), susceptible de coopérer avec des fentes d'assemblage (63) prévues dans lesdites coques (C1,C2).

13. Connecteur électrique selon l'une des revendications 1 à 12,
caractérisé en ce que lesdites coques (C1,C2) s'assemblent le long d'un plan de joint (PJ) formé d'épaulements longitudinaux coopérants (64 à 67).

14. Connecteur électrique selon l'une des revendications 1 à 13,
caractérisé en ce qu'au moins ses coques assemblées sont fixées l'une à l'autre par des vis (25).

## Patentansprüche

1. Elektrischer Verbinder (CE), der einen Modulträger (PM) und eine Kammer (CC) für die Verdrahtung aufweist, die getrennt aber benachbart sind, wobei der Modulträger eine Vielzahl von Verbindungsmodulen (MC) enthält, die auf der der Kammer für die Verdrahtung entgegengesetzten Seite eine Steckseite (FE) bilden, die gestattet, den Verbinder mit einem komplementären elektrischen Verbinder zu verbinden, der ähnlich oder unterschiedlich, aber mit einer komplementären Steckseite versehen ist, wobei die Verbindungsmodule ferner auf der zur Kammer für die Verdrahtung gerichteten Seite eine Anschlußseite (FB) für die Enden der elektrischen Leiter bilden, die in die Kammer für die Verdrahtung durch deren Wand eindringen, und wobei die Module mit durch sie hindurchgehenden Verbindungsorganen (8) versehen sind, um die elektrischen Verbindungen zwischen der Steckseite und der Anschlußseite sicherzustellen, dadurch gekennzeichnet:
- daß die Vielzahl von Verbindungsmodulen (MC) in Zeilen und Spalten angeordnet ist, um dem Modulträger (PM) parallel zur Steckfläche einen annähernd rechteckigen Querschnitt zu geben, und
- daß die Kammer (CC) für die Verdrahtung aus zwei aneinander sowie am Modulträger anbringbaren Schalen (C1, C2) besteht.

2. Elektrischer Verbinder nach Anspruch 1, dadurch gekennzeichnet, daß die Wand der Kammer für die Verdrahtung, durch die die elektrischen Leiter eindringen, schräg und in Richtung der Leiter orientiert ist.

3. Elektrischer Verbinder nach einem der Ansprüche 1 oder 2, bei dem Kanäle vorgesehen sind, die die elektrischen Leiter umgeben und mit der Wand der Kammer für die Verdrahtung verbunden sind, durch welche Wand die Leiter, die in die Verdrahtungskammer eindringen, hindurchgehen, dadurch gekennzeichnet, daß
- die Kanäle aus zwei in Längsrichtung getrennten Halbkanälen zusammensetzbar sind; und
- die Kanäle durch Einschließen zwischen den zusammengesetzten Schalen mit der Kammer für die Verdrahtung verbunden gehalten werden.

4. Elektrischer Verbinder nach Anspruch 3, dadurch gekennzeichnet, daß jeder Halbkanal (30, 40) mit einem quer verlaufenden plattenförmigen Basisteil (32, 37) versehen ist, daß diese Basisteile nach dem Zusammensetzen der Halbkanäle quer verlaufende Basisplatten (36) für die Kanäle bilden und daß Spalte (54) in der Dicke der Seitenwände (52) der Schalen vorgesehen sind, die als Aufnahme für die quer verlaufenden Basisplatten (36) dienen.

5. Elektrischer Verbinder nach Anspruch 3 oder 4, dadurch gekennzeichnet, daß jeder Halbkanal (40) einen halbkreisförmigen Querschnitt aufweist.

6. Elektrischer Verbinder nach Anspruch 3 oder 4, dadurch gekennzeichnet, daß jeder Halbkanal (30) einen U-förmigen Querschnitt aufweist.

7. Elektrischer Verbinder nach einem der Ansprüche 3 oder 4, dadurch gekennzeichnet, daß er wenigstens einen Aufbau (ECH) aus zwei verbundenen Kanälen aufweist, bei dem jeder der Kanäle an seinem dem Verbinder entgegengesetzten freien Ende mit einer flachen Seite (42) gestaltet ist, wobei die verbundenen Kanäle durch ihre jeweiligen flachen Seiten (42) aneinanderfügbar sind, um, wenn auch innerlich durch die flachen Seiten unterteilt, eine gemeinsame Endhülse (43) für den Durchgang der elektrischen Leiter zu bilden.

8. Elektrischer Verbinder nach Anspruch 7, dadurch gekennzeichnet, daß die freien Enden der Kanäle die Form von Halbzylindern haben, so daß die gemeinsame Endhülse (43) zylindrisch ist.

9. Elektrischer Verbinder nach einem der Ansprüche 3 bis 8, dadurch gekennzeichnet, daß die Halbkanäle sich längs einer in Längsrichtung verlaufenden Verbindungsfläche (33, 41) zusammenfügen, die aus zusammenwirkenden, in Längsrichtung verlaufenden Schultern (34, 35) gebildet ist.

10. Elektrischer Verbinder nach einem der Ansprüche 4 bis 9, dadurch gekennzeichnet, daß der freie Rand (55) der Seitenwände (52) der Schalen lotrecht zu den Schlitzen (54) bogenförmige Ausschnitte (56) in einer der Außenform der Kanäle (CH) entsprechenden Gestalt aufweist.

11. Elektrischer Verbinder nach einem der Ansprüche 1 bis 10, dadurch gekennzeichnet, daß der Modulträger (PM) auf der Seite der Kammer (CC) für die Verdrahtung eine Einfassung (50) aufweist, die die Anschlußseite (FB) umgibt und der Befestigung der Schalen am Modulträger dient.

12. Elektrischer Verbinder nach Anspruch 11, dadurch gekennzeichnet, daß die Einfassung (50) eine vorstehende Umfangsleiste (62) aufweist, die dazu geeignet ist, mit den Montagenuten (63) zusammenzuwirken, die in den Schalen (C1, C2) vorgesehen sind.

13. Elektrischer Verbinder nach einem der Ansprüche 1 bis 12, dadurch gekennzeichnet, daß die Schalen (C1, C2) sich längs einer Verbindungsfläche (PJ) zusammensetzen lassen, die aus zusammenwirkenden, in Längsrichtung verlaufenden Schultern (64 bis 67) gebildet ist.

14. Elektrischer Verbinder nach einem der Ansprüche 1 bis 13, dadurch gekennzeichnet, daß wenigstens seine zusammengesetzten Schalen mit Schrauben (25) aneinander befestigt sind.

## Claims

1. Electrical connector (CE) including a module carrier (PM) and a wiring chamber (CC) which are separate but adjacent, the said module carrier having a plurality of connection modules (MC) which form, on the side opposite the said wiring chamber, a plug-in face (FE) enabling the said connector to be connected to a complementary electrical connector, which is similar or different, but which is provided with a complementary plug-in face and on the side facing the said wiring chamber a connection face (FB) for the ends of electrical conductors penetrating into the said wiring chamber through the wall thereof, the said modules being provided with connection members (8) passing through them in order to provide the electrical connection between the said plug-in face and the said connection face, characterized:
- in that the said plurality of connection modules (MC) is arranged in rows and in columns in order to give the said module carrier (PM), parallel to the said plug-in face, an approximately square section; and
- in that the said wiring chamber (CC) consists of two shells (C1, C2) which can be joined together, as well as to the said module carrier.

2. Electrical connector according to Claim 1, characterized in that the wall of the said wiring chamber, through which the said electrical conductors penetrate, is oblique and oriented in the direction of the said conductors.

3. Electrical connector according to one of Claims 1 and 2, in which ducts are provided surrounding the said electrical conductors and solidly fastened to the wall of the said wiring chamber through which the said conductors penetrate into the latter, characterized in that:
- the said ducts consist of two half-ducts which can be joined longitudinally; and
- the said ducts are held solidly fastened to the said wiring chamber by being held trapped between the said joined shells.

4. Electrical connector according to Claim 3, characterized in that each half-duct (30, 40) is provided with a transverse base platelet (32, 37), in that the said transverse base platelets form, after joining the said half-ducts, transverse base plates (36) for the said ducts and in that slots (54) are provided in the thickness of side walls (52) of the said shells in order to serve as a housing for the said transverse base plates (36).

5. Electrical connector according to Claim 3 or 4, characterized in that each half-duct (40) has a semicircular section.

6. Electrical connector according to Claim 3 or 4, characterized in that each half-duct (30) has a U-shaped section.

7. Electrical connector according to one of Claims 3 and 4, characterized in that it includes at least one assembly (ECH) of two associated ducts, in which each of the said ducts is shaped, at its free end opposite the said connector, with a flat (42), the said associated ducts being adjoinable, one against the other, by their respective flats (42), in order to form an end sleeve (43), which is common, although internally divided by the said flats, for the passage of the said electrical conductors.

8. Electrical connector according to Claim 7, characterized in that the said free ends of the said ducts are semi-cylindrical, so that the said common end sleeve (43) is cylindrical.

9. Electrical connector according to one of Claims 3 to 8, characterized in that the said half-ducts are joined along a longitudinal junction plane (33, 41) formed by interacting longitudinal shoulders (34, 35).

10. Electrical connector according to one of Claims 4 to 9, characterized in that the free edge (55) of the said side walls (52) of the said shells includes, plumb with the said slots (54), curved cut-outs (56) of shape corresponding to the external shape of the said ducts (CH).

11. Electrical connector according to one of Claims 1 to 10, characterized in that the said module carrier (PM) includes, on the side of the said wiring chamber (CC), a frame (50) surrounding the said connection face (FB) and serving for the solid fastening of the said shells to the said module carrier.

12. Electrical connector according to Claim 11, characterized in that the said frame (50) includes a projecting peripheral rim (62), capable of interacting with assembly slots (63) provided in the said shells (C1, C2).

13. Electrical connector according to one of Claims 1 to 12, characterized in that the said shells (C1, C2) are joined along a junction plane (PJ) formed by interacting longitudinal shoulders (64 to 67).

14. Electrical connector according to one of Claims 1 to 13, characterized in that at least its joined shells are fixed to each other by screws (25).
